# DEMANDE DE BREVET EUROPEEN

(11) **EP 2 508 248 A1**
(43) Date de publication de la demande: **10.10.2012**
(21) Numéro de dépôt: 12002589.5
(22) Date de dépôt: 27.11.2007
(51) Int. Cl.: B01D 65/04, B01D 61/20, B01D 63/02, B01D 61/22, B01D 63/06, B01D 65/02

(54) **Dispositif pour empêcher la formation de dépôts aux entrées des membranes tubulaires ou capillaires d'un module de filtration tangentielle**

(62) Demande divisionnaire de: 07360059.5
(71) Demandeur: Bucher Vaslin (Société Anonyme), 49290 Chalonnes sur Loire (FR)
(72) Inventeur: Baranger, Alain, 49120 La chapelle Rousselin (FR); Cadot, Yannick, 49140 Corze (FR); Dobrowolski, Eric, 49800 Trelaze (FR); Noilet, Pascal, 49000 Angers (FR)
(74) Mandataire: Nuss, Laurent

(57) **Abrégé**

La présente invention a pour objet un dispositif pour empêcher la formation de dépôts au niveau des entrées des membranes tubulaires ou capillaires, ou membranes en forme de tubes capillaires, d'un module de filtration tangentielle pour liquides chargés de particules, essentiellement organiques, notamment de précurseurs de matières fibreuses.

Dispositif caractérisé en ce qu'il comprend essentiellement au moins un moyen fonctionnel (5) réalisant une action, continue ou intermittente, de raclage ou d'écrêtage dans le plan d'entrée commun (PE) du faisceau de membranes tubulaires ou capillaires (3) du module de filtration considéré ou dans un plan parallèle audit plan (PE), dispositif (1) caractérisé en ce que ledit au moins un moyen fonctionnel (5) se présente sous la forme d'un organe de raclage (5) avec au moins une arête de raclage (6) circulant sensiblement dans le plan d'entrée commun (PE), ledit organe de raclage (5) étant monté à pivotement ou à rotation autour d'un axe (X) sensiblement perpendiculaire et centré par rapport audit plan d'entrée (PE) et en ce que en ce que ladite au moins une arête de raclage (6) est une arête souple, glissant en appui sur le plan d'entrée commun (PE) du faisceau de membranes tubulaires ou capillaires.

## Description

La présente invention concerne le domaine des installations et équipements réalisant la filtration tangentielle de liquides chargés de particules.

L'invention vise plus particulièrement les équipements pour la filtration tangentielle des bourbes, des lies de vins, de moûts, des jus de fruits ou de liquides analogues fortement chargés en particules essentiellement organiques, issues de la préparation de ces liquides ou de tout procédé de transformation ayant abouti à cette concentration.

L'invention a, dans ce contexte, pour objet un dispositif pour empêcher la formation de dépôts au niveau des entrées ou ouvertures d'entrée des membranes capillaires ou tubulaires d'un module de filtration tangentielle.

Le principe de la filtration tangentielle est bien connu. Dans ce type de filtration, le liquide à filtrer circule le long d'une membrane perméable, c'est-à-dire de façon tangentielle à la membrane, la filtration étant réalisée par le différentiel de pression existant de part et d'autre de la membrane. Le seuil de coupure de la membrane détermine le niveau de filtration ou la taille des particules retenues par la membrane. Le flux tangentiel mis en oeuvre dans ce procédé de filtration permet de décolmater en continu la surface de la membrane par la circulation du liquide pendant la filtration.

Ainsi, le liquide à traiter est amené à circuler le long d'une membrane qui retient les particules au dessus d'une taille déterminée et laisse passer les composantes liquides et les particules de faible taille sous l'effet de la pression fournie par l'alimentation en liquide à traiter.

Généralement, les membranes sont conformées en tubes ou conduits et arrangées en faisceaux dans des modules allongés comportant chacun un côté alimentation relié à un conduit amenant le liquide à filtrer sous pression, un côté opposé d'évacuation pour la sortie du rétentat provenant des différents tubes membranaires (éventuellement réinjecté) et au moins une sortie pour le perméat se retrouvant dans les espaces interstitiels entre les tubes membranés.

Un type de membranes couramment utilisé pour la mise en oeuvre de la filtration tangentielle sont les membranes dites capillaires ou tubulaires, c'est-à-dire en forme de tubes à section tubulaire de faible diamètre. Ce dernier est choisi en fonction de la nature du liquide à filtrer : turbidité, viscosité, pourcentage de matières humides, taille maximale des charges, ...

Ces membranes tubulaires ou capillaires sont arrangées en faisceau et généralement montés dans un corps creux cylindrique dans lequel ils sont assemblés entre eux, à leurs extrémités opposées, par une couche de résine de liaison et de fermeture des espaces interstitiels destinés à collecter le perméat. La mise à niveau des entrées des membranes tubulaires ou capillaires forme ainsi un plan d'entrée commun, sous la forme d'une surface ajourée, définie par le bloc de résine au niveau de la face supérieure duquel débouchent les tubes.

La figure 1 montre, à titre d'exemple non limitatif, un module de filtration tangentielle du type évoqué ci-dessus.

La figure 2 est une vue partielle en coupe, à une autre échelle, de la partie supérieure du module représenté sur la figure 1.

Vue de dessus, dans la direction du flux de circulation, les entrées des membranes tubulaires ou capillaires forment les ouvertures d'une plaque perforée.

Or, lors de la filtration de bourbes, de moûts ou de produits similaires, tels que jus de fruits, ou de façon plus générale de produits contenant des précurseurs de matières fibreuses telles que matières cellulosiques, il se forme à l'entrée des membranes tubulaires ou capillaires un dépôt fibreux venant obstruer lesdits capillaires et empêchant la circulation dans ces derniers. Le principe de décolmatage par circulation tangentielle le long de la face interne du capillaire ou tube n'est dans ce cas plus assuré. La filtration se réduit à une filtration frontale avec un risque de colmatage rapide.

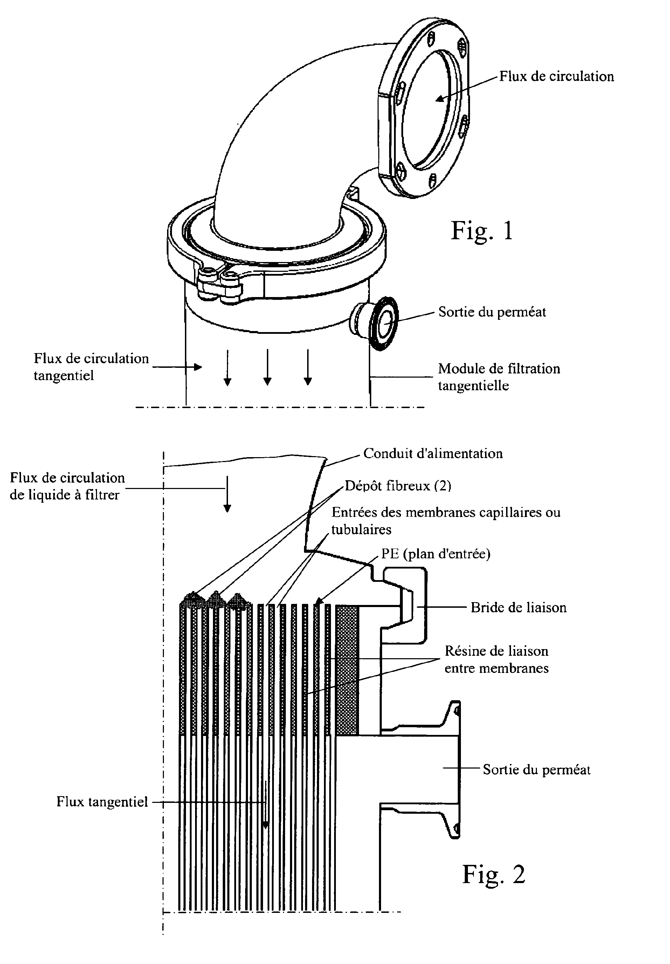

De plus, ce dépôt fibreux au niveau des entrées des membranes tubulaires ou capillaires constitue en lui-même un piège pour les particules plus fines, le tout formant in fine un agglomérât qui obstrue totalement lesdites entrées (voir figure 2).

Ce type de dépôt n'est pas éliminé par les opérations de lavage ou de rinçage quelle que soit la température de l'eau et quel que soit l'additif utilisé, dans le cycle traditionnel de fonctionnement du filtre.

Par les documents EP-A-0 499 509 et WO-A-2005/028087, on connaît des modules de filtration à capillaires pourvus d'un organe d'obturation circulant, destiné à faire varier le flux de manière cyclique dans les capillaires de manière à décolmater les surfaces de filtration des capillaires.

Cet organe se présente sous la forme d'un disque ajouré au niveau d'un ou de plusieurs secteurs angulaires, ce disque circulant à distance du plan d'entrée desdites capillaires.

Un tel organe ne permet pas d'éliminer les dépôts fibreux susceptibles de se former à l'entrée des capillaires, mais réalise en fait un lissage et un compactage de ces dépôts, résultant en la formation d'un gâteau de matière fibreuse colmatant à terme lesdites entrées.

Un but de la présente invention est de proposer une solution simple évitant la formation des dépôts fibreux précités à l'entrée des capillaires, et/ou éliminant de tels dépôts lorsqu'ils sont formés.

A cet effet, l'invention a pour objet un dispositif pour empêcher la formation de dépôts au niveau des entrées des membranes tubulaires ou capillaires d'un module de filtration tangentielle pour liquides chargés de particules, essentiellement de particules organiques, notamment de précurseurs de matières fibreuses, ce dispositif comprenant essentiellement au moins un moyen fonctionnel réalisant une action, continue ou intermittente, de raclage ou d'écrêtage dans le plan d'entrée commun du faisceau de membranes tubulaires ou capillaires du module de filtration considéré ou dans un plan parallèle audit plan, dispositif **caractérisé en ce que** ledit au moins un moyen fonctionnel se présente sous la forme d'un organe de raclage avec au moins une arête de raclage, ledit organe de raclage étant monté à pivotement ou à rotation autour d'un axe sensiblement perpendiculaire et centré par rapport audit plan d'entrée et en ce que en ce que ladite au moins une arête de raclage se déplace en appui glissant sur le plan d'entrée commun du faisceau de membranes tubulaires ou capillaires.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :

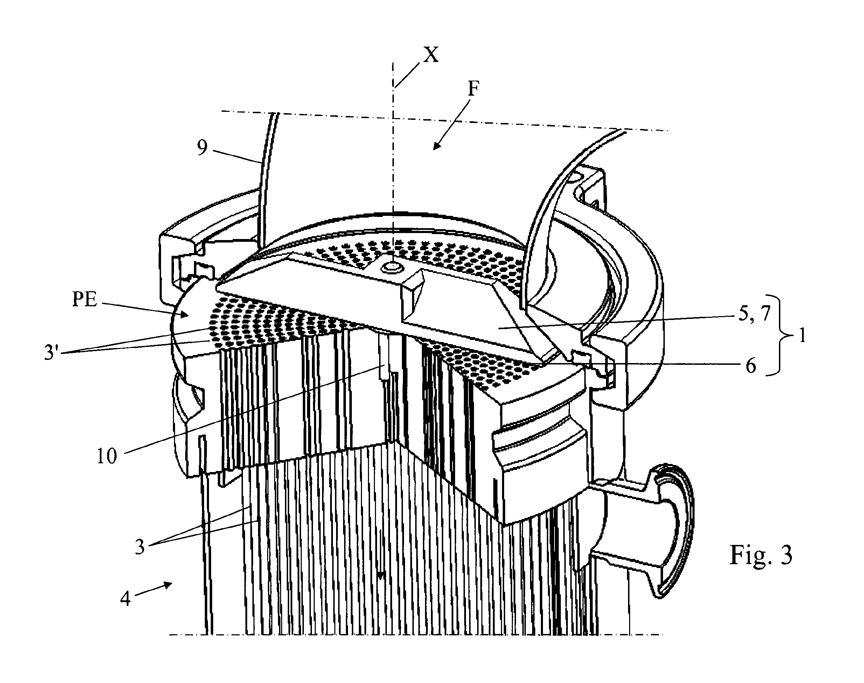

la figure 3 est une vue partielle en coupe et en perspective de la partie supérieure d'un module de filtration tangentielle comportant un dispositif selon une première variante d'un premier mode de réalisation de l'invention ;

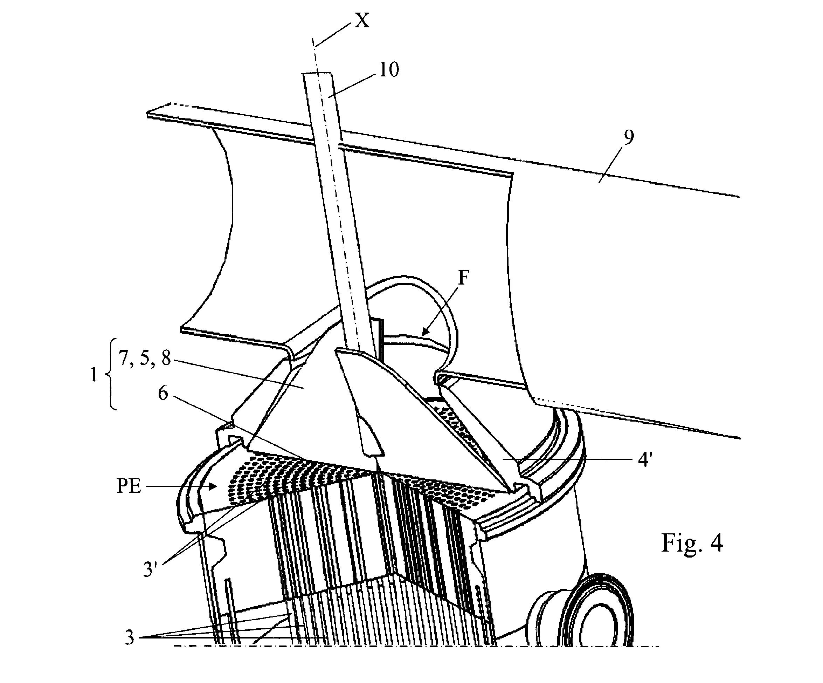

la figure 4 est une vue partielle en coupe et en perspective de la partie supérieure d'un module de filtration tangentielle comportant un dispositif selon une seconde variante du premier mode de réalisation de l'invention ;

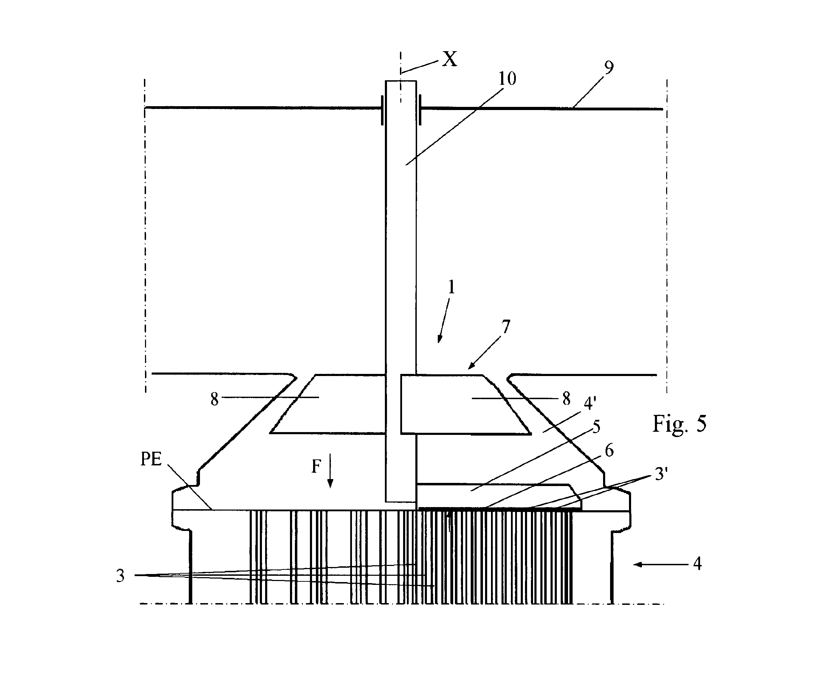

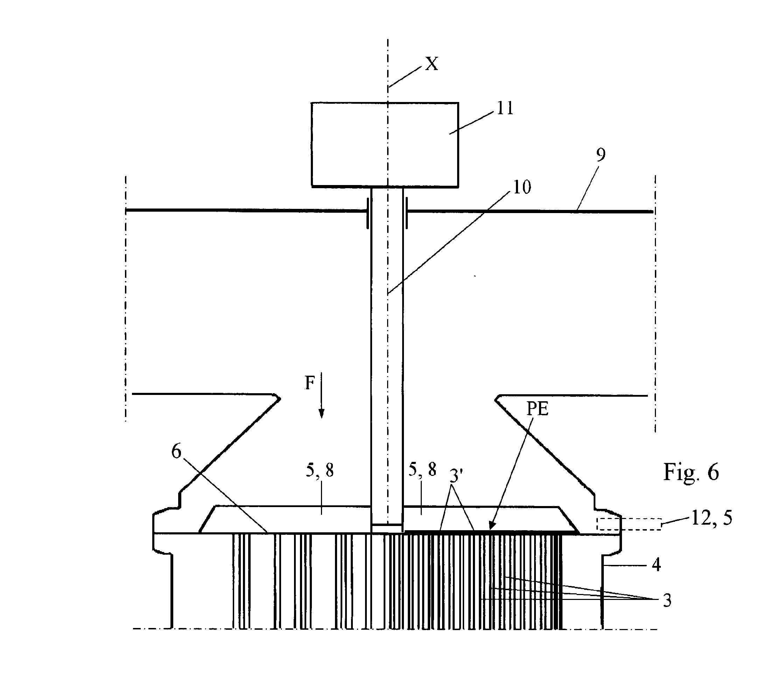

les figures 5 et 6 sont des représentations schématiques en coupe de la partie supérieure d'un module pourvu d'un dispositif selon deux autres modes de réalisation de l'invention en accord avec une solution de type mécanique ;

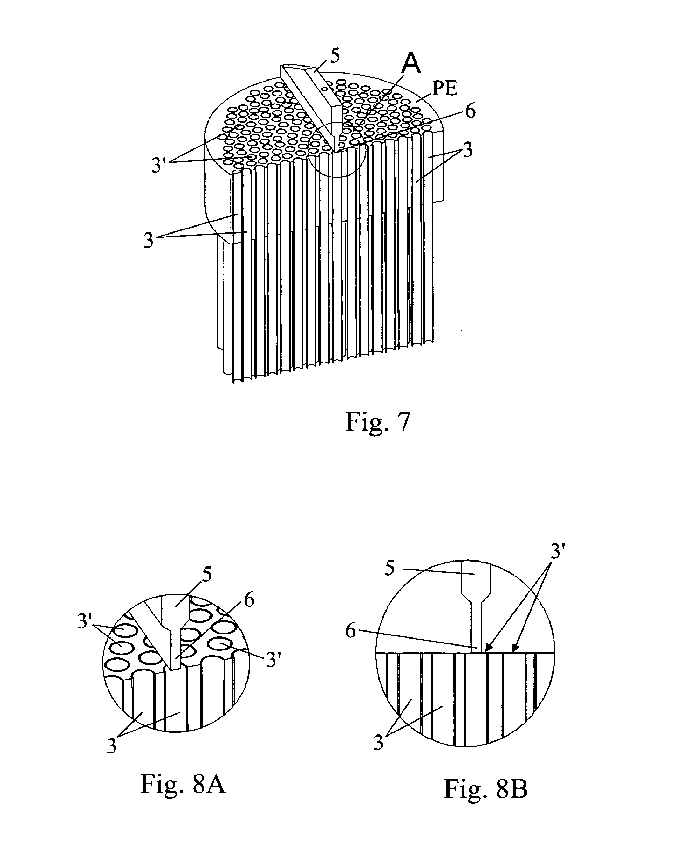

la figure 7 est une vue partielle en coupe de la partie supérieure d'un module de filtration pourvu d'un dispositif de raclage selon une autre variante de réalisation, et,

les figures 8A et 8B sont des vues à une échelle différente du détail A de la figure 7, respectivement en perspective et en élévation frontale.

Les figures 3 à 7 des dessins annexés montrent un dispositif 1 pour empêcher la formation de dépôts 2 au niveau des entrées 3' des membranes tubulaires ou capillaires 3 d'un module de filtration tangentielle 4 pour liquides chargés de particules, essentiellement organiques, notamment de précurseurs de matières fibreuses.

Ce dispositif 1 comprend essentiellement au moins un moyen fonctionnel 5 réalisant une action, continue ou intermittente, de raclage ou d'écrêtage dans le plan d'entrée commun PE du faisceau de membranes tubulaires ou capillaires 3 du module de filtration 4 considéré ou dans un plan parallèle audit plan PE.

Conformément à l'invention, ledit au moins un moyen fonctionnel 5 se présente sous la forme d'un organe de raclage 5 avec au moins une arête de raclage 6 circulant sensiblement (par son bord) dans le plan d'entrée commun PE, ledit organe de raclage 5 étant monté à pivotement ou à rotation autour d'un axe X sensiblement perpendiculaire et centré par rapport audit plan d'entrée PE (Fig. 3 à 4). Ladite au moins une arête de raclage 6 glisse en appui sur le plan d'entrée commun PE du faisceau de membranes tubulaires ou capillaires lors de la rotation autour de l'axe X.

L'arête de raclage 6 constitue la partie de l'organe de raclage 5 la plus proche du plan d'entrée PE (en contact). L'organe de raclage 5 est adapté en taille (longueur) à la section du faisceau de membranes tubulaires ou capillaires 3 au niveau du plan d'entrée PE et peut comprendre un(e) ou plusieurs branches ou bras animé(e)s d'un mouvement de balayage guidé, du fait de leur montage rigide sur un arbre ou une tige 10 animé(e) d'un mouvement de rotation.

En plus du raclage, l'organe 5 réalise également un cisaillement des matières fibreuses et des précurseurs de ces dernières.

Comme le montrent les figures 4, 7, 8A et 8B, et comme le suggèrent les figures 5 et 6, la dimension transversale ou largeur de l'arête 6 de raclage de l'organe 5, ou au moins le bord de l'arête en contact glissant au niveau du plan d'entrée PE constitué par la surface ajourée formée par les ouvertures 3' des capillaires 3 débouchant au niveau du bloc de résine les reliant de manière connue au niveau de leurs extrémités, est préférentiellement inférieure au diamètre desdites ouvertures 3' (par exemple de l'ordre de 50 %). Ainsi, le flux de circulation du fluide à circuler n'est jamais totalement interrompu dans les capillaires 3, ce qui permet d'éviter les coups de bélier dans les capillaires 3 qui sont susceptibles d'endommager ou de rompre les parois de celles-ci, ce tout en réalisant un raclage efficace enlevant tout dépôt au niveau du plan PE du fait du contact.

Ladite arête pourra présenter une constitution rigide ou être réalisée en un matériau souple.

Selon un premier principe de fonctionnement du dispositif 1, l'entraînement de l'organe de raclage 5 est réalisé par le flux de circulation F du liquide à filtrer, par l'intermédiaire d'un organe d'entraînement 7 exposé audit flux F et générant un mouvement de rotation. Dans ce cas, aucune source d'énergie, ni aucun actionneur spécifique n'est nécessaire et le raclage s'effectue automatiquement, avec une intensité en rapport avec l'importance du flux de circulation.

En accord avec un premier mode de réalisation mettant en oeuvre le principe précité, représenté sur les figures 3 et 4, l'organe de raclage 5 et l'organe d'entraînement 7 de ce dernier sont confondus et consistent en une hélice à au moins deux pales 8 ou en une roue à ailettes.

En accord avec un second mode de réalisation mettant également en oeuvre le principe précité, et comme le montre la figure 5, l'organe d'entraînement 7 est distinct de l'organe de raclage 5, est choisi dans le groupe formé par une hélice, une roue à ailettes ou à aubes, une turbine ou analogue et est monté dans le compartiment ou embout d'entrée 4' du module de filtration 4 ou dans le conduit d'alimentation 9 de ce dernier, sur un arbre 10 portant également l'organe de raclage 5.

Le montage rotatoire de l'organe de raclage 5, combiné avec l'organe 6 d'entraînement en rotation ou associé à ce dernier sur un(e) même arbre ou tige 10, peut être réalisé au moyen d'un palier rapporté ou ménagé dans le faisceau de membranes tubulaires ou capillaires 3, d'un palier rapporté ou ménagé dans le conduit d'alimentation 9 ou de deux paliers opposés prévus dans les deux éléments précités.

De manière avantageuse, il peut être prévu une construction telle que l'organe d'entraînement 7 et/ou l'organe de raclage 6 réalise une déviation ou une organisation du flux de circulation F alimentant le module de filtration 4 de manière à produire un flux laminaire ou à action laminaire au niveau des entrées 3' des membranes tubulaires ou capillaires 3.

Selon un second principe de fonctionnement, illustré par le mode de réalisation représenté sur la figure 6, l'entraînement de l'organe de raclage 5 est réalisé par un actionneur 11, à fonctionnement continu ou commandé à intervalles réguliers ou en fonction d'au moins un signal de capteur.

Ce capteur de débit ou de pression permettra de commander la vitesse de rotation et/ou la pression d'appui de l'organe 5 en fonction des conditions d'écoulement dans le module de filtration.

Conformément à une caractéristique avantageuse, l'actionneur 11, par exemple sous la forme d'un moteur situé à l'extérieur du circuit de circulation, est commandé par un automate ou une unité de commande analogue, le cas échéant en fonction d'au moins un signal délivré par au moins un capteur par exemple de pression, de débit ou autre.

L'actionneur 11 lui-même pourra être situé en partie haute ou basse du module 4, en fonction du montage de l'organe 5.

Ainsi, l'invention propose, selon une réalisation préférentielle, une solution permettant d'empêcher la formation du ou des dépôt(s) 2 au-dessus des entrées 3' des membranes tubulaires ou capillaires 3 par une double action : action de raclage de la surface de plan d'entrée PE des membranes tubulaires ou capillaires 3 pendant la phase de circulation du liquide filtré et action de déviation du flux entrant dans les membranes tubulaires ou capillaires 3 de façon à donner au flux une action laminaire ne favorisant pas les dépôts fibreux 2.

Comme décrit ci-dessus, ladite solution repose sur l'utilisation du flux généré par la circulation. L'action provoquée et exploitée consiste d'une part à dévier le flux d'entrée dans les membranes tubulaires ou capillaires 3 et d'autre part à utiliser l'énergie de ce flux de circulation pour faire tourner un organe de raclage 5 à la surface du module 4 (plan d'entrée PE).

Selon une autre variante de réalisation, non représentée, le dispositif 1 peut comprendre au moins deux moyens fonctionnels 5, à savoir au moins un premier moyen de raclage de type mécanique sous la forme d'un organe 5 de raclage mobile avec au moins une arête de raclage 6 et au moins un second moyen de raclage 5 de type hydraulique, par exemple sous la forme d'un moyen 12 de génération d'au moins un jet de liquide tangentiel au plan (PE), à savoir une pluralité de jets fixes répartis ou un jet balayeur.

L'invention concerne également une installation de filtration comprenant au moins un module de filtration tangentielle, le, au moins un ou chaque module intégrant un faisceau de membranes tubulaires ou capillaires avec un plan d'entrée commun pour ces derniers, installation, **caractérisée en ce que** le ou au moins un module 4 comporte un dispositif 1 pour la réduction ou l'élimination préventive et/ou curative des dépôts, notamment de nature fibreuse, au niveau des entrées 3' des membranes tubulaires ou capillaires 3, du type décrit ci-dessus.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif pour empêcher la formation de dépôts au niveau des entrées des membranes tubulaires ou capillaires d'un module de filtration tangentielle pour liquides chargés de particules organiques, notamment de précurseurs de matières fibreuses, ce dispositif (1) comprenant essentiellement au moins un moyen fonctionnel (5) réalisant une action, continue ou intermittente, de raclage ou d'écrêtage dans le plan d'entrée commun (PE) du faisceau de membranes tubulaires ou capillaires (3) du module de filtration (4) considéré ou dans un plan parallèle audit plan (PE), dispositif (1) **caractérisé en ce que** ledit au moins un moyen fonctionnel (5) se présente sous la forme d'un organe de raclage (5) avec au moins une arête de raclage (6), rigide ou souple, ledit organe de raclage (5) étant monté à pivotement ou à rotation autour d'un axe (X) sensiblement perpendiculaire et centré par rapport audit plan d'entrée (PE) et **en ce que en ce que** ladite au moins une arête de raclage (6) se déplace en appui glissant sur le plan d'entrée commun (PE) du faisceau de membranes tubulaires ou capillaires.

2. Dispositif selon la revendication 1, **caractérisé en ce que** l'entraînement de l'organe de raclage (5) est réalisé par le flux de circulation (F) du liquide à filtrer, par l'intermédiaire d'un organe d'entraînement (7) exposé audit flux (F) et générant un mouvement de rotation.

3. Dispositif selon la revendication 2, **caractérisé en ce que** l'organe de raclage (5) et l'organe d'entraînement (7) de ce dernier sont confondus et consistent en une hélice à au moins deux pales (8) ou en une roue à ailettes.

4. Dispositif selon la revendication 2, **caractérisé en ce que** l'organe d'entraînement (7) est distinct de l'organe de raclage (5), est choisi dans le groupe formé par une hélice, une roue à ailettes ou à aubes, une turbine ou analogue et est monté dans le compartiment ou embout d'entrée (4') du module de filtration (4) ou dans le conduit d'alimentation (9) de ce dernier, sur un arbre (10) portant également l'organe de raclage (5).

5. Dispositif selon l'une quelconque des revendications 2 à 4, **caractérisé en ce que** l'organe d'entraînement (7) et/ou l'organe de raclage (6) réalise une déviation ou une organisation du flux de circulation (F) alimentant le module de filtration (4) de manière à produire un flux laminaire ou à action laminaire au niveau des entrées (3') des membranes tubulaires ou capillaires (3).

6. Dispositif selon la revendication 1, **caractérisé en ce que** l'entraînement de l'organe de raclage (5) est réalisé par un actionneur (11), à fonctionnement continu ou commandé à intervalles réguliers ou en fonction d'au moins un signal de capteur.

7. Dispositif selon la revendication 6, **caractérisé en ce que** l'actionneur (11), par exemple sous la forme d'un moteur situé à l'extérieur du circuit de circulation, est commandé par un automate ou une unité de commande analogue, le cas échéant en fonction d'au moins un signal délivré par au moins un capteur par exemple de pression, de débit ou autre.

8. Dispositif selon l'une quelconque des revendications 1 à 7, **caractérisé en ce que** la dimension transversale ou largeur de l'arête (6) de raclage de l'organe (5), ou au moins le bord de l'arête en contact glissant au niveau du plan d'entrée (PE), est inférieure au diamètre des ouvertures (3') des capillaires (3), par exemple de l'ordre de 50 %, l'arête étant éventuellement réalisée en un matériau souple.

9. Dispositif selon la revendication 1, **caractérisé en ce qu'**il comprend au moins deux moyens fonctionnels (5), à savoir au moins un premier moyen de raclage de type mécanique sous la forme d'un organe (5) de raclage mobile avec au moins une arête de raclage (6) et au moins un second moyen de raclage (5) de type hydraulique, par exemple sous la forme d'un moyen de génération (12) d'au moins un jet de liquide tangentiel au plan (PE), à savoir une pluralité de jets fixes répartis ou un jet balayant.

10. Installation de filtration pour bourbes, lies de vins, moûts, jus de fruits ou liquides analogues fortement chargés en particules organiques, ladite installation comprenant au moins un module de filtration tangentielle, le ou chaque module intégrant un faisceau de membranes tubulaires ou capillaires avec un plan d'entrée commun pour ces derniers, installation **caractérisée en ce que** le, au moins un ou chaque module (4) comporte un dispositif (1) pour la réduction ou l'élimination préventive et/ou curative des dépôts, notamment de nature fibreuse, au niveau des entrées (3') des membranes tubulaires ou capillaires (3), selon l'une quelconque des revendications 1 à 9.
